# FASCICULE DE BREVET EUROPEEN

(11) **EP 4 080 185 B1**
(45) Date de publication et mention de la délivrance du brevet: **07.08.2024**
(21) Numéro de dépôt: 22169550.5
(22) Date de dépôt: 22.04.2022
(51) Int. Cl.: G01M 3/24, G01M 5/00

(54) **PROCÉDÉ ET DISPOSITIF DE DÉTECTION D'ANOMALIE DE PRESSION DANS UNE CONDUITE DE FLUIDE**
VERFAHREN UND VORRICHTUNG ZUR ERKENNUNG VON DRUCKANOMALIEN IN EINER FLUIDLEITUNG
METHOD AND DEVICE FOR DETECTING PRESSURE ANOMALIES IN A FLUID LINE

(30) Priorité: 23.04.2021 FR 2104244
(43) Date de publication de la demande: 26.10.2022
(73) Titulaire: Lacroix Group, 44800 Saint Herblain (FR)
(72) Inventeur: FAURANT, Nicolas, 35770 VERN SUR SEICHE (FR); HOUDANT, Igor, 35770 VERN SUR SEICHE (FR)
(74) Mandataire: Lavoix

(56) Documents cités:
- CN-A- 108 279 088

## Description

La présente invention concerne un procédé et un dispositif de détection d'anomalie de pression dans une conduite de fluide.

L'invention se situe dans le domaine des installations de conduite de fluides, et en particulier de la sécurité de fonctionnement de telles installations. Elle trouve des applications particulières dans le domaine des installations de distribution d'eau.

De telles installations comportent des conduites de fluide, par exemple des conduites d'eau. Un des problèmes à traiter dans ce domaine est de détecter des anomalies de pression dans les conduites d'eau, ces anomalies de pression, également connues sous le nom de « coups de bélier », étant susceptibles d'endommager les conduites d'eau et donc d'induire des frais de maintenance élevés.

Un tel phénomène d'anomalie de pression correspond à un régime transitoire de variation de la vitesse d'écoulement du fluide dans la conduite, ces variations de vitesse pouvant induire un changement brutal de pression, qui a son tour est susceptible de générer une onde de choc dans la conduite d'eau.

Il existe donc un besoin de détecter de tels phénomènes transitoires dans les conduites d'eau d'une installation, en particulier d'un réseau de distribution d'eau.

Le document CN 108 279 088 A décrit un dispositif de détection de pression sans fil, capable de détecter un « coup de marteau » sur une conduite, ainsi qu'un système de détection de pression associé. Le dispositif de détection de pression comporte un module de détection de vibrations, qui est adapté à être fixé sur la conduite de fluide et qui réveille un microprocesseur après détection qu'une valeur relative à la vibration détectée dépasse un seuil. Le réveil induit une augmentation d'une fréquence d'échantillonnage de mesures de pression.

Il est connu d'utiliser des capteurs de pression intrusifs aux conduites d'eau (e.g. les canalisations d'un réseau de distribution d'eau), de tels capteurs étant configurés pour relever constamment, à intervalles réguliers, la pression dans la conduite d'eau, de manière à permettre la détection de la survenue d'une surpression, qui constitue une anomalie de pression susceptible de générer une onde de choc. Cependant, le placement de capteurs de pression doit être effectué en perçant les conduites d'eau, ce qui est intrusif. De plus, les capteurs de pression doivent prélever des mesures de pression constamment, ce qui est consommateur d'énergie électrique, et des interventions de maintenance sont nécessaires, par exemple en cas d'épuisement de la source d'énergie électrique des capteurs.

L'invention a pour objet de remédier aux inconvénients de l'état de la technique, en proposant une solution de détection d'anomalie de pression dans les conduites de fluide qui soit moins invasive et moins consommatrice d'énergie électrique.

A cet effet, l'invention propose, selon un aspect, un dispositif de détection d'anomalie de pression dans une conduite de fluide selon la revendication 1.

Avantageusement, la détection de vibrations caractéristiques d'une anomalie de pression, causées par l'onde de choc du phénomène d'anomalie de pression, peut être effectuée de manière non intrusive dans la conduite d'eau, et dans un mode de très faible consommation d'énergie électrique.

Avantageusement, uniquement suite à la réception d'un signal de réveil en provenance du module de détection de vibrations, l'unité de traitement passe à un deuxième mode de fonctionnement actif, et plus consommateur d'énergie électrique. Ainsi, la consommation électrique est largement limitée pour la détection de telles anomalies qui sont des phénomènes transitoires.

Le dispositif de détection d'anomalie de pression selon l'invention peut également présenter une ou plusieurs des caractéristiques des revendications dépendantes 2 à 8, prises indépendamment ou selon toutes les combinaisons techniquement envisageables.

Selon un autre aspect, l'invention concerne un procédé de détection d'anomalie de pression dans une conduite de fluide selon la revendication 9.

Le procédé comporte des avantages analogues à ceux du dispositif de détection d'anomalie de pression dans une conduite de fluide.

Selon un mode de réalisation, la vérification de présence d'anomalie de pression met en oeuvre un réseau de neurones paramétré par apprentissage pour discriminer entre vibrations parasites et vibrations représentatives d'une anomalie de pression.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 est un exemple schématique de conduite d'eau équipée d'un dispositif de détection d'anomalie de pression dans un cas d'application de l'invention;
[Fig 2] la figure 2 est un synoptique général des principaux modules d'un dispositif de détection d'anomalie de pression;
[Fig 3] la figure 3 est un synoptique d'un dispositif de détection d'anomalie de pression comprenant un module de détection de vibrations selon un premier mode de réalisation de l'invention ;
[Fig 4] la figure 4 est un synoptique d'un dispositif de détection d'anomalie de pression comprenant un module de détection de vibrations selon un deuxième mode de réalisation de l'invention ;
[Fig 5] la figure 5 est un synoptique des principales étapes d'un procédé de détection d'anomalie de pression selon un mode de réalisation de l'invention.

L'invention sera décrite plus particulièrement dans son application dans des installations de distribution d'eau, mais elle n'est pas limitée à ce cas d'application et s'applique pour toute conduite de fluide dans une installation.

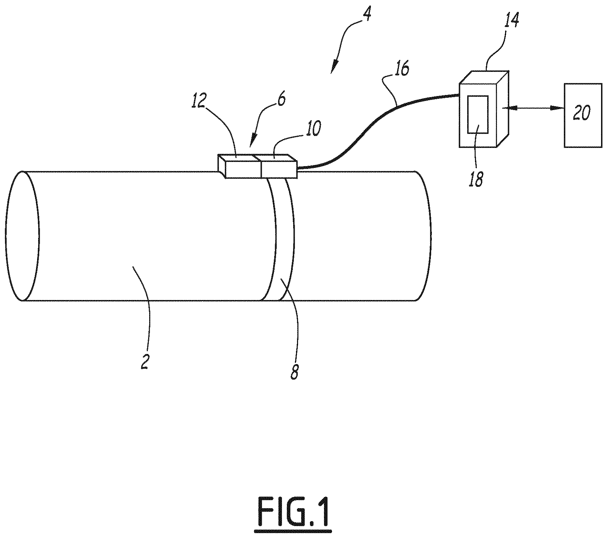

La figure 1 illustre schématiquement une conduite d'eau 2, par exemple faisant partie d'un réseau de distribution d'eau (non représenté), équipée d'un système 4 à dispositif de détection d'anomalie de pression selon l'invention.

Le système 4 comprend un dispositif de détection d'anomalie de pression 6, qui est attaché à la conduite d'eau 2 par une fixation 8, qui est dans l'exemple de la figure 1 un collier de serrage qui entoure la conduite d'eau 2, est réalisé en tout matériau approprié.

Selon une variante particulièrement avantageuse, lorsque la conduite d'eau 2 est en matériau métallique, la fixation 8 est un aimant.

Avantageusement, la fixation 8 permet d'attacher le dispositif de détection 6 à l'extérieur de la conduite d'eau 2, donc de manière non intrusive. Avantageusement, toute maintenance d'un tel dispositif 6 de détection est facilitée dans la mesure où ce dispositif est placé à l'extérieur de la conduite d'eau 2, et plus généralement de la conduite de fluide.

Le dispositif de détection 6 comprend un module 10 de détection de vibrations et une unité de traitement 12 comme décrit plus en détail ci-après.

Le dispositif de détection 6 est connecté à un équipement électronique 14 de surveillance de fonctionnement de l'installation.

La connexion entre le dispositif de détection 6 et l'équipement électronique 14 est par exemple une connexion filaire 16, permettant une communication selon un protocole de communication filaire. Selon une variante, le dispositif de détection 6 et l'équipement électronique 14 sont munis d'interfaces de communication radio, et sont adaptés alors pour communiquer par une liaison radio 16.

Dans un mode de réalisation, l'équipement 14 comporte une interface de communication 18, par exemple une interface de communication radio, adaptée à communiquer avec un équipement externe 20, par exemple un ordinateur, une tablette ou un téléphone de type smartphone d'un utilisateur. L'équipement externe 20 comporte notamment une interface utilisateur permettant de recevoir des messages et/ou des alertes à destination d'un utilisateur, qui est par exemple un opérateur de maintenance de l'installation dont fait partie la conduite d'eau 2.

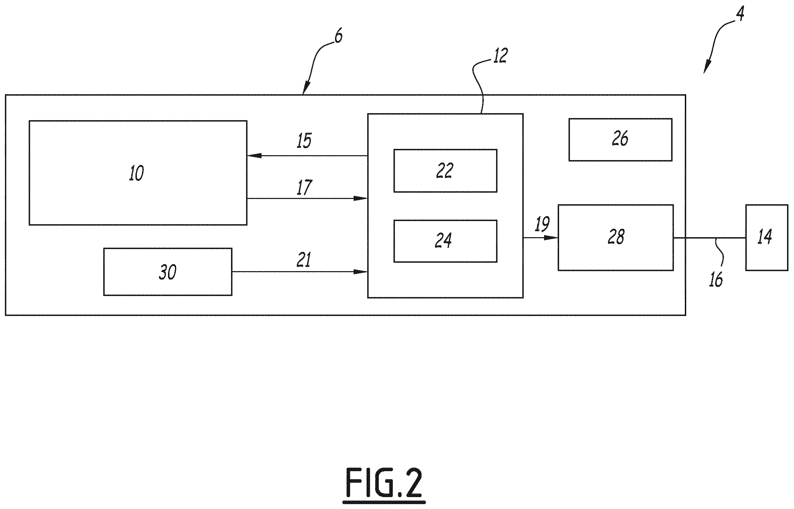

La figure 2 illustre schématiquement un dispositif 6 de détection d'anomalie de pression, appelé plus simplement dispositif de détection 6 par la suite.

Ce dispositif de détection 6 comprend un module 10 de détection de vibrations, dont plusieurs modes de réalisation sont envisagés, comme décrit ci-après.

Le dispositif de détection 6 comprend également une unité de traitement 12, qui comprend un processeur de calcul 22, par exemple un micro-contrôleur, et une unité de mémoire électronique 24.

Le dispositif de détection 6 comprend une source d'alimentation 26, par exemple une pile ou une batterie d'accumulateurs.

On distingue deux modes de fonctionnement des unités alimentées par la source d'alimentation 26, qui sont respectivement un mode de veille, à consommation électrique limitée, et un mode de fonctionnement actif, dans lequel la consommation électrique des diverses unités ou modules du dispositif de détection 6 est nominale.

En particulier, l'unité de traitement 12 est configurée pour réaliser des calculs, dans le mode de fonctionnement actif, alors que dans le mode de fonctionnement de veille, l'unité de traitement 12 n'effectue pas de calculs.

En mode de fonctionnement de veille, la consommation d'électricité du dispositif 6 est très faible, par exemple la consommation des unités de l'ensemble du dispositif de détection 6 est inférieure à 33µW, de préférence inférieure à 17µW.

En mode de fonctionnement actif, la consommation d'électricité des diverses unités du dispositif de détection 6 est considérablement plus élevée que la consommation d'électricité en mode de veille, par exemple de l'ordre de 300µW à 1 mW hors communication, la consommation effective dépendant notamment du micro-contrôleur 22, de la variante de mise en oeuvre du procédé, de la présence de certaines unités telles un capteur de pression.

Par exemple, la source d'alimentation électrique 26 est une batterie au Lithium, ou une batterie Lithium/lon (Li/lon) ou nickel-hydrure métallique (NiMH), permettant de délivrer une tension de l'ordre de 3,3V.

Le module 10 de détection de vibrations est connecté à l'unité de traitement 12, et est adapté à recevoir des signaux de configuration 15 de l'unité de traitement 12, et à envoyer un signal de réveil 17 à l'unité de traitement 12. Le signal de réveil 17 est adapté pour faire passer l'unité de traitement 12 du mode de fonctionnement de veille au mode de fonctionnement actif.

Le dispositif de détection 6 comprend également une interface de communication 28, permettant de transmettre une information de présence d'anomalie de pression à un équipement externe 14, sur commande 19 provenant de l'unité de traitement 12.

Dans un mode de réalisation, l'interface de communication 28 est réalisée simplement sous forme d'un interrupteur, également appelé contact sec, dont la fermeture permet de transmettre un signal d'alerte à l'équipement externe 14.

Dans un autre mode de réalisation, l'interface de communication 28 est une interface de communication adaptée pour mettre en oeuvre un protocole de communication, par exemple un protocole filaire, et la liaison 16 est une liaison filaire de type RS485.

Dans un autre mode de réalisation, l'interface de communication 28 est une interface radio permettant de communiquer sur un réseau privé ou public via un protocole radio : par exemple LoRaWan, SigFox ^{®}, NB-loT, LTE-M. Dans ce cas la liaison 16 est un support radio. En mode de fonctionnement de veille, l'interface radio est soit désactivée, soit dans un mode très faible consommation.

En mode de fonctionnement actif, l'interface de communication 28 est alimentée en énergie électrique de manière à pouvoir fonctionner en émission/réception.

Optionnellement, l'unité de traitement 12 est connectée à un capteur de mesures physiques 30, par exemple un capteur de pression.

Dans un mode de réalisation, le capteur de pression 30 et le module de détection font partie d'un même sous ensemble de capteurs.

Dans un mode de réalisation, le module de détection 6 est intégré avec un capteur de pression 30, mais le capteur de pression n'est mis en fonction pour relever des mesures physiques de pression que lorsqu'un signal de réveil 17 est émis par le module 10 de détection de vibrations. Les mesures physiques relevées sont dans ce cas transmises via un signal de transmission 21 à l'unité de traitement 12.

Selon une variante de mise en oeuvre, le dispositif de détection 6 comprend uniquement le module de détection de vibrations 10 et une interface de communication 28, et l'unité de traitement 12 est intégrée dans l'équipement externe 14.

Selon une autre variante, la source d'alimentation électrique 26 est externe au dispositif 6, et l'alimentation en électricité est effectuée via un câble conducteur.

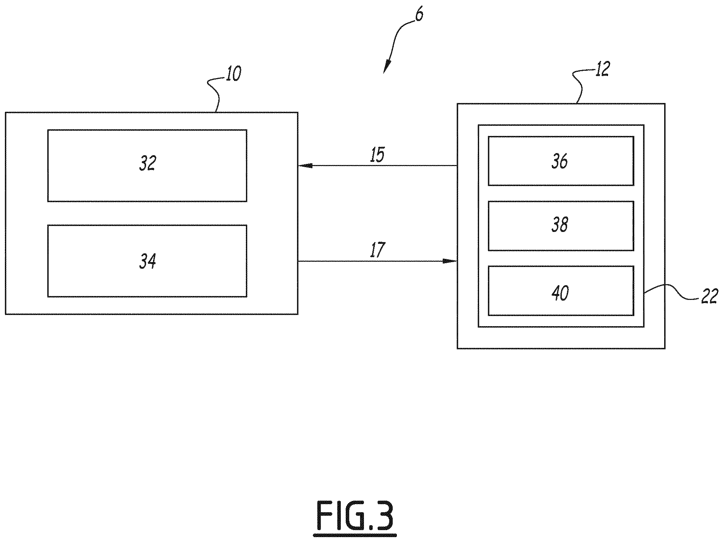

La figure 3 illustre un premier mode de réalisation d'un module de détection de vibrations 10 d'un dispositif de détection 6 d'anomalie de pression.

Dans ce mode de réalisation, le module 10 de détection de vibrations comporte un capteur 32 qui est un accéléromètre 3 axes à très faible consommation d'électricité, permettant de mesurer une accélération linéaire selon 3 axes de détection formant un référentiel 3D. De préférence, l'accéléromètre 32 est un accéléromètre MEMS (de l'anglais « Microelectromechanical systems ») : microsystème électromécanique fabriqué à partir de matériaux semi-conducteurs, ce type d'accéléromètre ayant une très faible consommation d'électricité, qui est inférieure à 20µA, par exemple comprises entre 0,5µA et 20µA. En variante, tout type d'accéléromètre à très faible consommation d'électricité peut être utilisé.

Dans un mode de réalisation, l'accéléromètre 32 est configuré pour effectuer des mesures à une fréquence temporelle donnée, par exemple à des intervalles temporels réguliers, par exemple toutes les 1,6 Hz à 1600Hz selon les phénomènes à observer.

Le module 10 de détection comporte une unité 34 de traitement des mesures d'accélération, configuré pour appliquer un critère de détection d'une anomalie de pression, qui consiste, dans un mode de réalisation, à comparer les valeurs d'accélération acquises sur chacun des axes à un seuil de détection S, qui est dans ce mode de réalisation un seuil d'accélération, prédéterminé.

L'unité 34 de traitement des valeurs d'accélération est également configurée pour générer un signal de réveil 17 lorsque le critère de détection d'une anomalie de pression est vérifié, par exemple lorsque le seuil de détection S est dépassé sur une fenêtre de temps, ce qui revient à ce qu'un nombre N de valeurs d'accélération acquises successivement dépasse le seuil de détection S. Par exemple, la fenêtre de temps est configurée pour trois fois la fréquence d'acquisition ou le nombre N est par exemple compris entre 1 et 10.

Dans un mode de réalisation, l'unité 34 est intégrée dans l'accéléromètre 32.

Les paramètres du module de détection de vibrations 10, permettant de mettre en oeuvre le critère de détection d'anomalie de pression, sont, dans cet exemple, la fréquence temporelle d'acquisition de mesures, le seuil de détection S et le nombre N ou la durée de la fenêtre de temps d'acquisition. Ces paramètres du module de détection de vibrations ont des valeurs configurables via le signal de configuration 15.

De préférence, les valeurs de ces paramètres sont choisies de manière à assurer une bonne détection de vibrations tout en limitant la consommation électrique. Par exemple pour une résolution de 14-bit (nombre de bits utilisés pour coder la valeur de l'accélération) et une alimentation du module 10 sous 1,8VCC, la consommation du module 10 est de :
0.5µA en moyenne pour une fréquence d'acquisition de 1,6Hz
2µA en moyenne pour une fréquence d'acquisition de 12,5Hz
25µA en moyenne pour une fréquence d'acquisition de 200Hz

Dans un mode de réalisation, le module de détection 10 est un accéléromètre 3 axes disponible sur étagère.

Dans le mode de réalisation de la figure 3, le signal de réveil 17 est envoyé à l'unité de traitement 12, qui est configurée pour mettre en oeuvre un module 36 de réception de mesures physiques, e.g. de valeurs d'accélération, échantillonnées après l'envoi du signal de réveil 17, un module 38 de vérification de présence d'anomalie de pression en fonction des valeurs de mesures physiques reçues et un module 40 d'envoi d'information de présence d'anomalie de pression, par exemple sous forme d'un message d'alerte ou d'un message de commande d'émission d'alerte à l'intention d'un opérateur.

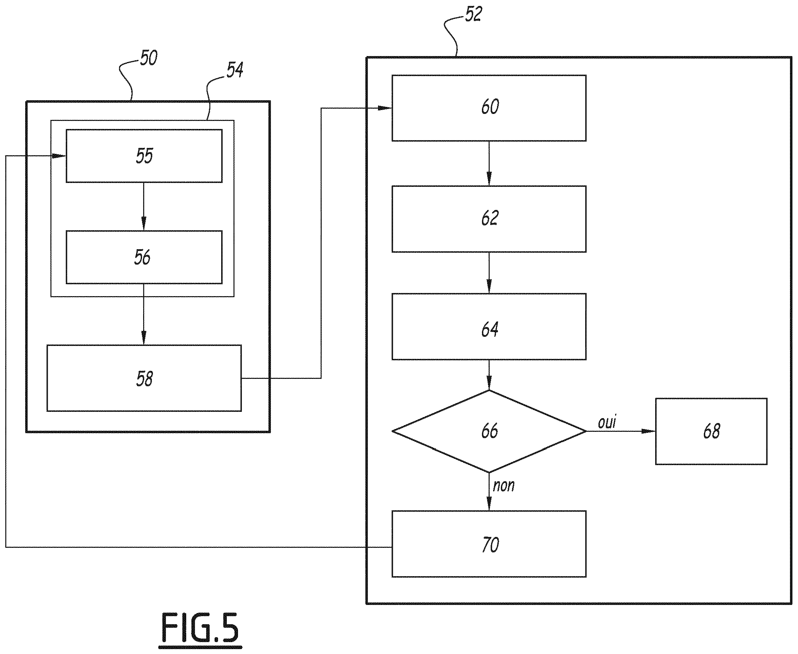

Des exemples de mise en oeuvre de vérification de présence d'anomalie de pression seront donnés ci-après en référence à la figure 5.

Dans un mode de réalisation, les modules 36, 38, 40 sont réalisés sous forme d'instructions de code exécutable et forment un programme d'ordinateur (ou logiciel) adapté pour exécuter un procédé de détection d'anomalie de pression selon l'invention. Ce programme d'ordinateur est exécuté par le processeur 22 de l'unité de traitement 12, lorsque l'unité de traitement 12 est dans le deuxième mode de fonctionnement actif.

Dans un mode de réalisation, ce programme d'ordinateur est mémorisé sur un support d'informations lisible par un dispositif électronique programmable. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

En variante non représentée, ces modules sont réalisés sous forme de circuit intégré dédié, tel qu'un ASIC (de l'anglais *Application Spécifie Integrated Circuit).*

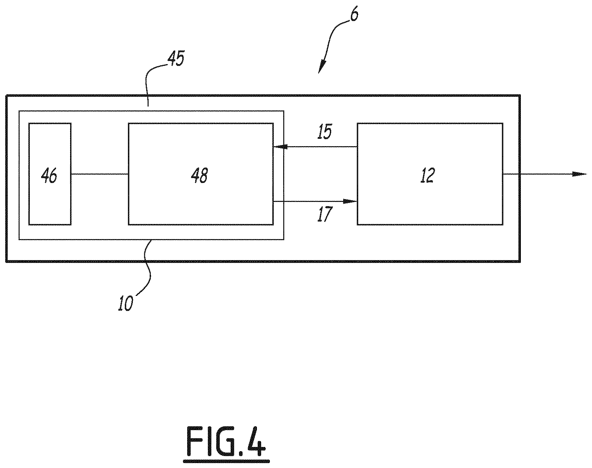

La figure 4 illustre un deuxième mode de réalisation d'un module 10 de détection de vibrations d'un dispositif de détection 6 d'anomalie de pression.

Dans ce deuxième mode de réalisation, le module 10 de détection de vibrations est réalisé sous forme d'une chaine de traitement réalisée sur une carte électronique 45, comportant un micro-capteur de vibrations 46, connecté à un circuit électronique 48. Le micro-capteur de vibrations 46 est par exemple un micro-capteur de type « tout ou rien », comportant une micro-bille entre deux contacteurs qui laisse passer un courant électrique par intermittence en présence de vibration : la vibration génère un rebond de la micro-bille sur le contact. Sans vibration, l'état de repos du micro-capteur de vibrations 46 ne laisse passer aucun courant ou un courant continu sans intermittence. Cet état de repos dépend de la position du capteur sur la conduite.

Le micro-capteur de vibrations 46 est connecté à un circuit électronique 48 via un fil conducteur électrique. Le circuit 48 comporte divers composants électroniques permettant de réaliser un filtrage du signal électrique à impulsions généré lorsque le micro-capteur de vibrations 46 réalise un contact électrique.

Le filtrage est par exemple un filtrage analogique avec un seuil de détection programmable, adapté pour effectuer une détection de vibration.

Dans un mode de réalisation, le filtre analogique se compose :d'un condensateur en parallèle à la micro-bille pour filtrer les rebonds de cette dernière, et d'un étage à comparateur à seuil programmable via un diviseur de tension sur son entrée V-. La sortie du comparateur passe à 1 si la tension moyenne V+ issue de la micro-bille est supérieure à V-. Lorsque la sortie du comparateur passe à 1, le signal de réveil 17 est transmis à l'unité de traitement 12. Ce filtre analogique permet de filtrer les vibrations de la conduite d'eau en fonctionnement normal (lié au écoulement d'eau par exemple) et de ne pas réveiller l'unité de traitement 12 dans ce cas.

Ainsi, dans ce mode de réalisation, le critère de détection d'anomalie de pression met en oeuvre un filtrage du signal électrique à impulsions généré par le micro-capteur de vibrations 46 : lorsque la tension moyenne du signal électrique à impulsions issu de la micro-bille est supérieure à un seuil de détection, qui est la tension V- dans cet exemple. Ce seuil de détection est programmé par le signal de configuration 15.

En complément, en cas de réveil lié à des vibrations liées au fonctionnement normal (les impulsions durent sur une fenêtre de temps importante), l'unité 12 augmente le seuil de détection en modifiant le pont diviseur sur l'entrée V- du comparateur via le signal de configuration 15.

Le circuit 48 est ainsi configuré pour générer un signal de réveil 17 qui est transmis à une unité de traitement 12, par exemple un micro-contrôleur configuré pour réaliser une vérification de présence d'anomalie de pression. Cette vérification est réalisée par un algorithme qui comptabilise le nombre de contacts. Dans un mode de réalisation, la vérification de présence est réalisée par un module de traitement du signal électrique filtré reçu du circuit électronique 48. Par exemple, cette vérification consiste à comptabiliser le nombre de signaux de réveil 17 reçus du circuit 48 dans une première fenêtre de temps puis de s'assurer de l'absence de ces signaux dans une seconde fenêtre de temps.

En variante, l'unité de traitement 12, suite à la réception du signal de réveil 17, est configurée pour collecter des mesures physiques en provenance d'un capteur, par exemple d'un capteur de pression, et ce sont ces mesures physiques qui sont traitées pour réaliser une vérification de présence d'anomalie de pression.

La figure 5 est un synoptique des principales étapes d'un procédé de détection d'anomalie de pression dans un mode de réalisation de l'invention.

Le procédé comporte une première phase 50 de détection de vibrations, et une deuxième phase 52 de vérification de présence d'anomalie de pression.

La première phase 50 est mise en oeuvre par le module de détection de vibrations 10, et la deuxième phase 52 est mise en oeuvre par l'unité de traitement.

La première phase 50 comporte une étape 54 de détection de présence d'au moins une vibration caractéristique d'une anomalie de pression dans la conduite, en fonction d'un critère de détection d'anomalie de pression.

Des paramètres de détection de vibrations, permettant de mettre en oeuvre le critère de détection d'anomalie de pression, sont, par exemple, la fréquence temporelle d'acquisition (ou relevé) de mesures, le seuil de détection S et le nombre N ou la durée de la fenêtre de temps d'acquisition.

Dans un mode de réalisation, les valeurs de ces paramètres sont configurées dynamiquement via un signal de configuration reçu de l'unité de traitement.

Dans un mode de réalisation, l'étape 54 comprend une sous-étape 55 de relevé de premières mesures physiques représentatives de l'accélération mesurée par un accéléromètre, ces mesures physiques étant dans ce cas des valeurs d'accélération, et la comparaison de chaque mesure à un seuil de détection S prédéterminé, et la détection d'une vibration lorsque la mesure est supérieure au seuil de détection S prédéterminé.

En variante, le seuil de détection S est obtenu via le signal de configuration.

L'étape 54 comprend également une sous-étape 56 de mise en oeuvre d'un critère de détection d'anomalie de pression, qui consiste, dans un mode de réalisation, en une comparaison du nombre L de vibrations successives détectées à un nombre N prédéterminé.

Lorsque le nombre L de vibrations successives détectées dépasse ce nombre N, le critère détection d'anomalie de pression est vérifié.

Le procédé comporte alors l'émission 58 d'un signal de réveil, destiné à faire passer les unités du dispositif de détection, et en particulier l'unité de traitement du premier mode de fonctionnement de veille, à faible consommation électrique, au deuxième mode de fonctionnement actif, dans lequel l'unité de traitement effectue des calculs.

Dans un mode de réalisation, les étapes 54 à 58 sont réalisées par un accéléromètre.

Dans une variante, l'étape 55 comporte la mise en oeuvre d'un algorithme d'apprentissage machine (en anglais « Machine Learning Core »), qui se base sur un arbre de décision préalablement enregistré, et permet d'analyser une succession de valeurs d'accélération détectées pour reconnaître un phénomène d'anomalie de pression.

La deuxième phase 52 comprend une étape 60 de réception de signal de réveil et de passage au mode de fonctionnement actif.

Ensuite, une pluralité de deuxièmes mesures physiques est reçue à l'étape de réception 62, ces deuxièmes mesures physiques, étant, dans un mode de réalisation, des valeurs d'accélération fournies par l'accéléromètre à des instants temporels ultérieurs à l'émission du signal de réveil.

En variante ou en complément, les deuxièmes mesures physiques comprennent des mesures physiques fournies par un autre capteur, par exemple un capteur de pression intégré avec le dispositif de détection comme décrit ci-dessus.

La pluralité de deuxièmes mesures physiques est fournie à un algorithme de traitement 64 qui effectue une vérification de présence d'anomalie de pression.

Dans un mode de réalisation, le traitement 64 de vérification de présence d'anomalie de pression met en oeuvre un algorithme d'intelligence artificielle, par exemple un réseau de neurones ou un arbre de décision, paramétré par apprentissage pour discriminer entre vibrations parasites et vibrations représentatives d'une anomalie de pression, pour reconnaître une succession de valeurs formant une signature d'anomalie de pression, e.g. de surpression.

Avantageusement, cela permet de discriminer entre des vibrations parasites et les vibrations représentatives d'une anomalie de pression. Les paramètres d'un tel réseau de neurones sont obtenus lors d'une étape d'apprentissage préalable, et sont mémorisés, par exemple dans l'unité de mémoire électronique 24 du dispositif de détection 6.

Selon une variante, le traitement 64 met en oeuvre un traitement de signal sur une ou plusieurs fenêtres temporelles d'observation.

Par exemple, suite à un réveil, pour un signal issu d'un accéléromètre ou d'un capteur de pression, le traitement de signal consiste à identifier sur une fenêtre de temps et après filtrage numérique, toutes les valeurs de minimum local et de maximum local entre des fronts montants et descendants du signal reçu et filtré, dans la fenêtre de temps considérée. Le traitement de signal vérifie les conditions suivantes :
- Le nombre de fronts montants est supérieur à un seuil prédéterminé ;
- Une alternance de valeurs minimales et de valeurs maximales ;
- Une fréquence régulière de valeurs de maximum local ;
- Une décroissance des valeurs de maximum local selon une formule spécifique.

Le procédé comprend ensuite une étape 66 de vérification de la détection effective d'une anomalie de pression, et en cas de réponse positive (détection effective d'anomalie de pression confirmée), une émission 68 d'une information de présence d'anomalie de pression, par exemple sous forme de message d'alerte, de commande d'affichage d'un message d'alerte par un dispositif externe.

En cas de réponse négative au test 66, l'unité de traitement repasse dans le mode de fonctionnement de veille (étape 70), et la première phase 50 du procédé est reprise.

Le procédé de détection d'anomalie de pression a été décrit ici dans un mode de réalisation, mis en oeuvre par un dispositif de détection tel que décrit dans la figure 3.

Dans une variante, lorsque le dispositif de détection est conforme au mode de réalisation de la figure 4, l'étape 54 de détection de présence d'au moins une vibration caractéristique d'une anomalie de pression dans la conduite met en oeuvre un filtrage analogique d'impulsion d'un signal électrique à impulsions, comme décrit ci-dessus en référence à la figure 4.

La deuxième phase 52 de vérification d'anomalie de pression est identique, mais le jeu de données est alors des impulsions au lieu de valeurs d'accélération.

Dans la variante qui utilise le module 30 pour acquérir des valeurs de pression suite à un réveil de l'unité 12, le procédé est identique mais le jeu de données se base sur les mesures de pression.

Selon une variante de mise en oeuvre, le dispositif de détection 6 réalise la première phase 50 et est configuré pour mémoriser des valeurs de mesures physiques relevées, et, suite à la génération d'un signal de réveil 17, une unité de traitement externe, par exemple intégrée dans l'équipement externe 14, effectue la deuxième phase de vérification de présence d'anomalie, en fonction des valeurs de mesures physiques relevées et mémorisées par le dispositif de détection 6. Dans cette variante, le signal de réveil 17 permet de basculer l'unité (ou interface) de communication du dispositif de détection 6 dans le deuxième mode de fonctionnement actif.

L'invention a été décrite en particulier pour la détection d'anomalie de pression de type « coup de bélier », mais elle s'applique de manière analogue pour la détection d'autres types d'anomalie de pression, la notion d'anomalie de pression étant définie par rapport à un cas d'utilisation prévu. Par exemple, l'anomalie de pression peut désigner la présence d'une pression d'écoulement de fluide dans une conduite d'une installation qui n'est pas supposée être utilisée, ce qui permet par exemple de détecter un dysfonctionnement ou une utilisation frauduleuse de l'installation, par exemple d'une conduite d'eau de borne à incendie.

L'invention a été décrite ci-dessus pour un dispositif de détection d'anomalie de pression fixé sur une conduite de fluide, qui est avantageusement non intrusif, l'accès et la maintenance d'un tel dispositif étant facilitées.

Le procédé comprend ensuite une étape 66 de vérification de la détection effective d'une anomalie de pression, et en cas de réponse positive (détection effective d'anomalie de pression confirmée), une émission 68 d'une information de présence d'anomalie de pression, par exemple sous forme de message d'alerte, de commande d'affichage d'un message d'alerte par un dispositif externe.

En cas de réponse négative au test 66, l'unité de traitement repasse dans le mode de fonctionnement de veille (étape 70), et la première phase 50 du procédé est reprise.

Le procédé de détection d'anomalie de pression a été décrit ici dans un mode de réalisation, mis en oeuvre par un dispositif de détection tel que décrit dans la figure 3.

Dans une variante, lorsque le dispositif de détection est conforme au mode de réalisation de la figure 4, l'étape 54 de détection de présence d'au moins une vibration caractéristique d'une anomalie de pression dans la conduite met en oeuvre un filtrage analogique d'impulsion d'un signal électrique à impulsions, comme décrit ci-dessus en référence à la figure 4.

La deuxième phase 52 de vérification d'anomalie de pression est identique, mais le jeu de données est alors des impulsions au lieu de valeurs d'accélération.

Dans la variante qui utilise le module 30 pour acquérir des valeurs de pression suite à un réveil de l'unité 12, le procédé est identique mais le jeu de données se base sur les mesures de pression.

Selon une variante de mise en oeuvre, le dispositif de détection 6 réalise la première phase 50 et est configuré pour mémoriser des valeurs de mesures physiques relevées, et, suite à la génération d'un signal de réveil 17, une unité de traitement externe, par exemple intégrée dans l'équipement externe 14, effectue la deuxième phase de vérification de présence d'anomalie, en fonction des valeurs de mesures physiques relevées et mémorisées par le dispositif de détection 6. Dans cette variante, le signal de réveil 17 permet de basculer l'unité (ou interface) de communication du dispositif de détection 6 dans le deuxième mode de fonctionnement actif.

L'invention a été décrite en particulier pour la détection d'anomalie de pression de type « coup de bélier », mais elle s'applique de manière analogue pour la détection d'autres types d'anomalie de pression, la notion d'anomalie de pression étant définie par rapport à un cas d'utilisation prévu. Par exemple, l'anomalie de pression peut désigner la présence d'une pression d'écoulement de fluide dans une conduite d'une installation qui n'est pas supposée être utilisée, ce qui permet par exemple de détecter un dysfonctionnement ou une utilisation frauduleuse de l'installation, par exemple d'une conduite d'eau de borne à incendie.

L'invention a été décrite ci-dessus pour un dispositif de détection d'anomalie de pression fixé sur une conduite de fluide, qui est avantageusement non intrusif, l'accès et la maintenance d'un tel dispositif étant facilitées.

## Revendications

1. Dispositif (6) de détection d'anomalie de pression dans une conduite de fluide, **caractérisé en ce qu'**il comporte un module (10) de détection de vibrations adapté pour être fixé sur ladite conduite (2) de fluide,
ledit module (10) de détection de vibrations étant configuré pour détecter une présence d'au moins une vibration caractéristique d'une anomalie de pression dans ladite conduite (2) en fonction d'un critère de détection d'anomalie de pression, et, en cas de vérification dudit critère de détection d'anomalie de pression, envoyer un signal de réveil (17) permettant de basculer des unités du dispositif de détection (6) d'un premier mode de fonctionnement de veille, à consommation d'énergie électrique limitée, à un deuxième mode de fonctionnement actif,
le dispositif comportant en outre une unité de traitement (12) comportant au moins un processeur (22) de calcul, dans lequel ledit signal de réveil (17) est transmis à ladite unité de traitement (12) pour faire basculer ladite unité de traitement (12) dans le deuxième mode de fonctionnement actif, ladite unité de traitement (12) étant configurée pour, suite audit signal de réveil (17), recevoir des mesures physiques d'un capteur (30,32, 46) fixé sur ladite conduite et pour mettre en oeuvre une vérification de présence d'anomalie de pression en fonction desdites mesures physiques, le processeur de calcul (22) de l'unité de traitement (12) étant configuré pour mettre en oeuvre, dans ledit deuxième mode de fonctionnement actif, un module (36) de réception de valeurs de mesures physiques, un module (38) de vérification de présence d'anomalie de pression en fonction des valeurs de mesures physiques et un module (40) d'envoi d'information de présence d'anomalie de pression à un équipement externe (14, 20).

2. Dispositif (6) selon la revendication 1, dans lequel ladite unité de traitement (12) est adaptée pour envoyer un signal (15) de configuration de paramètres audit module (10) de détection de vibrations, lesdits paramètres étant associés au critère de détection d'anomalie de pression.

3. Dispositif selon l'une des revendications 1 ou 2, dans lequel ledit module (10) de détection de vibrations comporte un accéléromètre (32), adapté pour relever des mesures d'accélération selon 3 axes spatiaux.

4. Dispositif selon la revendication 3, dans lequel ledit capteur fixé sur ladite conduite est ledit accéléromètre (32) du module de détection de vibrations (10).

5. Dispositif selon l'une quelconque des revendications 1 à 4, dans lequel capteur fixé sur ladite conduite est un capteur (30) de pression.

6. Dispositif selon l'une quelconque des revendications 1 à 5, dans lequel la vérification d'un critère de détection d'anomalie de pression comprend la vérification du dépassement d'un seuil de détection prédéterminé pour un nombre prédéterminé de vibrations successives.

7. Dispositif selon l'une des revendications 1 ou 2, dans lequel ledit module de détection de vibrations comporte un micro-capteur de vibrations (46) connecté à un circuit électronique (48), ledit micro-capteur de vibrations (46) étant adapté pour réaliser un contact électrique intermittent permettant d'acheminer un signal électrique à impulsions vers ledit circuit électronique (48) en cas de présence de vibration.

8. Dispositif selon la revendication 7, dans lequel ledit circuit électronique (48) comprend des composants électroniques de filtrage, permettant de réaliser un filtrage du signal électrique à impulsions, généré lorsque le micro-capteur de vibrations (46) réalise un contact électrique, le critère de détection d'anomalie de pression étant mis en oeuvre par ledit filtrage.

9. Procédé de détection d'anomalie de pression dans une conduite de fluide, mis en oeuvre dans un dispositif (6) de détection d'anomalie de pression comportant un module (10) de détection de vibrations adapté pour être fixé sur ladite conduite de fluide, le procédé comportant une première phase (50) mise en oeuvre par ledit module (10) de détection de vibrations comportant une détection de présence (54) d'au moins une vibration caractéristique d'une anomalie de pression dans ladite conduite en fonction d'un critère de détection d'anomalie de pression, et, en cas de vérification dudit critère de détection d'anomalie de pression, un envoi (58) d'un signal de réveil, permettant de basculer des unités du dispositif de détection d'un premier mode de fonctionnement de veille, à consommation d'énergie électrique limitée, à un deuxième mode de fonctionnement actif, le procédé étant mis en oeuvre par un dispositif (6) de détection d'anomalie de pression comportant en outre une unité de traitement (12) comportant au moins un processeur de calcul (22), le procédé comportant en outre une deuxième phase (52) mise en oeuvre par ladite unité de traitement (12), la deuxième phase (52) comportant, suite à une réception (60) dudit signal de réveil, une réception (62) de mesures physiques d'un capteur fixé sur ladite conduite et une mise en oeuvre d'une vérification (64, 66) de présence d'anomalie de pression en fonction desdites mesures physiques.

10. Procédé selon la revendication 9, dans lequel la vérification de présence d'anomalie de pression met en oeuvre un réseau de neurones paramétré par apprentissage pour discriminer entre vibrations parasites et vibrations représentatives d'une anomalie de pression.

## Patentansprüche

1. Vorrichtung (6) zum Erfassen einer Druckanomalie in einer Fluidleitung, **dadurch gekennzeichnet, dass** sie ein Modul (10) zum Erfassen von Vibrationen umfasst, das angepasst ist, um an der Fluidleitung (2) befestigt zu werden,
das Vibrationserfassungsmodul (10) konfiguriert ist, um ein Vorhandensein von mindestens einer Vibration, die für eine Druckanomalie in der Leitung (2) charakteristisch ist, abhängig von einem Druckanomalie-Erfassungskriterium zu erfassen und im Falle der Überprüfung des Druckanomalie-Erfassungskriteriums ein Wecksignal (17) zu senden, das es ermöglicht, Einheiten der Erfassungsvorrichtung (6) von einem ersten Standby-Betriebsmodus mit begrenztem elektrischem Energieverbrauch in einen zweiten aktiven Betriebsmodus umzuschalten,
die Vorrichtung ferner umfassend eine Verarbeitungseinheit (12), umfassend mindestens einen Rechenprozessor (22), wobei das Wecksignal (17) an die Verarbeitungseinheit (12) übertragen wird, um die Verarbeitungseinheit (12) in den zweiten aktiven Betriebsmodus zu wechseln, die Verarbeitungseinheit (12) konfiguriert ist, um nach dem Wecksignal (17) physikalische Messungen von einem Sensor (30, 32, 46) zu empfangen, der an der Leitung befestigt ist, und eine Überprüfung auf das Vorhandensein einer Druckanomalie abhängig von den physikalischen Messungen zu implementieren, wobei der Rechenprozessor (22) der Verarbeitungseinheit (12) konfiguriert ist, um in dem zweiten aktiven Betriebsmodus ein Modul (36) zum Empfangen von physikalischen Messwerten, ein Modul (38) zum Überprüfen des Vorhandenseins von Druckanomalien abhängig von den physikalischen Messwerten und ein Modul (40) zum Senden von Informationen über das Vorhandensein von Druckanomalien an eine externe Ausrüstung (14, 20) zu implementieren.

2. Vorrichtung (6) nach Anspruch 1, wobei die Verarbeitungseinheit (12) dazu angepasst ist, um ein Parameterkonfigurationssignal (15) an das Vibrationserfassungsmodul (10) zu senden, wobei die Parameter mit dem Erfassungskriterium einer Druckanomalie assoziiert sind.

3. Vorrichtung nach einem der Ansprüche 1 oder 2, wobei das Vibrationserfassungsmodul (10) einen Beschleunigungsmesser (32) umfasst, der angepasst ist, um Beschleunigungsmessungen entlang von 3 Raumachsen aufzunehmen.

4. Vorrichtung nach Anspruch 3, wobei der an der Leitung befestigte Sensor der Beschleunigungsmesser (32) des Vibrationserfassungsmoduls (10) ist.

5. Vorrichtung nach einem der Ansprüche 1 bis 4, wobei der an der Leitung befestigte Sensor ein Drucksensor (30) ist.

6. Vorrichtung nach einem der Ansprüche 1 bis 5, wobei die Überprüfung eines Erfassungskriteriums einer Druckanomalie die Überprüfung der Überschreitung eines vorbestimmten Erfassungsschwellenwerts für eine vorbestimmte Anzahl von aufeinanderfolgenden Vibrationen umfasst.

7. Vorrichtung nach einem der Ansprüche 1 oder 2, wobei das Vibrationserfassungsmodul einen Mikrovibrationssensor (46) umfasst, der mit einer elektronischen Schaltung (48) verbunden ist, wobei der Mikrovibrationssensor (46) angepasst ist, um einen intermittierenden elektrischen Kontakt herzustellen, der es ermöglicht, ein elektrisches Impulssignal an die elektronische Schaltung (48) weiterzuleiten, wenn eine Vibration vorhanden ist.

8. Vorrichtung nach Anspruch 7, wobei die elektronische Schaltung (48) elektronische Filterkomponenten umfasst, die eine Filterung des elektrischen Impulssignals ermöglichen, das erzeugt wird, wenn der Mikrovibrationssensor (46) einen elektrischen Kontakt herstellt, wobei das Erfassungskriterium einer Druckanomalie durch die Filterung implementiert wird.

9. Erfassungsverfahren von Druckanomalien in einer Fluidleitung, das in einer Erfassungsvorrichtung (6) von Druckanomalien durchgeführt wird, umfassend ein Vibrationserfassungsmodul (10), das angepasst ist, um an der Fluidleitung befestigt zu werden,
das Verfahren umfassend
eine erste Phase (50), die von dem Vibrationserfassungsmodul (10) implementiert wird, umfassend eine Erfassung des Vorhandenseins (54) mindestens einer Vibration, die für eine Druckanomalie in der Leitung charakteristisch ist, abhängig von einem Erfassungskriterium der Druckanomalie und im Fall der Überprüfung des Erfassungskriteriums der Druckanomalie ein Senden (58) eines Wecksignals, das es ermöglicht, Einheiten der Erfassungsvorrichtung von einem ersten Betriebsmodus des Standby-Modus mit begrenztem Verbrauch an elektrischer Energie in einen zweiten aktiven Betriebsmodus umzuschalten, wobei das Verfahren von einer Erfassungsvorrichtung (6) von Druckanomalien implementiert wird, ferner umfassend eine Verarbeitungseinheit (12), der mindestens einen Rechenprozessor (22) umfasst, das Verfahren ferner umfassend eine zweite Phase (52), die von der Verarbeitungseinheit (12) implementiert wird, die zweite Phase (52) umfassend im Anschluss an ein Empfangen (60) des Wecksignals ein Empfangen (62) von physikalischen Messungen eines an der Leitung befestigten Sensors und eine Implementierung einer Überprüfung (64, 66) des Vorhandenseins einer Druckanomalie abhängig von den physikalischen Messungen.

10. Verfahren nach Anspruch 9, wobei die Überprüfung auf das Vorhandensein einer Druckanomalie ein neuronales Netz implementiert, das durch Lernen parametrisiert wurde, um zwischen störenden Vibrationen und Vibrationen, die repräsentativ für eine Druckanomalie sind, zu unterscheiden.

## Claims

1. A device (6) for detecting a pressure anomaly in a fluid pipe, **characterised in that** it comprises a vibration detection module (10) adapted to be fixed to said fluid pipe (2),
said vibration detection module (10) being configured to detect the presence of at least one vibration characteristic of a pressure anomaly in said pipe (2) as a function of a pressure anomaly detection criterion, and, if said pressure anomaly detection criterion is verified, to send a wake-up signal (17) enabling units of the detection device (6) to switch from a first standby operating mode, with limited electrical energy consumption, to a second active operating mode,
the device further comprising a processing unit (12) comprising at least one calculation processor (22), wherein said wake-up signal (17) is transmitted to said processing unit (12) to switch said processing unit (12) into the second active operating mode, said processing unit (12) being configured so as, following said wake-up signal (17), to receive physical measurements from a sensor (30, 32, 46) fixed to said pipe and to implement verification of the presence of a pressure anomaly as a function of said physical measurements, the calculation processor (22) of the processing unit (12) being configured to implement, in said second active operating mode, a module (36) for receiving physical measurement values, a module (38) for verifying the presence of a pressure anomaly as a function of the physical measurement values and a module (40) for sending information on the presence of a pressure anomaly to external equipment (14, 20).

2. A device (6) according to claim 1, wherein said processing unit (12) is adapted to send a parameter configuration signal (15) to said vibration detection module (10), said parameters being associated with the pressure anomaly detection criterion.

3. A device according to one of claims 1 or 2, in which said vibration detection module (10) comprises an accelerometer (32), adapted to take acceleration measurements along 3 spatial axes.

4. A device according to claim 3, wherein said sensor fixed to said pipe is said accelerometer (32) of the vibration detection module (10).

5. A device according to any one of claims 1 to 4, in which sensor fixed to said pipe is a pressure sensor (30).

6. A device according to any one of claims 1 to 5, wherein verification of a pressure anomaly detection criterion comprises verification that a predetermined detection threshold is exceeded for a predetermined number of successive vibrations.

7. A device according to one of claims 1 or 2, wherein said vibration detection module comprises a vibration micro-sensor (46) connected to an electronic circuit (48), said vibration micro-sensor (46) being adapted to make intermittent electrical contact to route a pulsed electrical signal to said electronic circuit (48) in the presence of vibration.

8. A device according to claim 7, in which the said electronic circuit (48) comprises electronic filtering components for filtering the pulsed electrical signal generated when the vibration micro-sensor (46) makes electrical contact, the pressure anomaly detection criterion being implemented by said filtering.

9. A method for detecting a pressure anomaly in a fluid line, implemented in a pressure anomaly detection device (6) comprising a vibration detection module (10) adapted to be fixed to said fluid line,
the method comprising
a first phase (50) implemented by said vibration detection module (10) comprising a detection of the presence (54) of at least one vibration characteristic of a pressure anomaly in said pipe as a function of a pressure anomaly detection criterion, and, in the event of verification of said pressure anomaly detection criterion, a sending (58) of a wake-up signal, making it possible to switch units of the detection device from a first standby operating mode, with limited electrical energy consumption, to a second active operating mode, the method being implemented by a pressure anomaly detection device (6) also comprising a processing unit (12) comprising at least one calculation processor (22), the method also comprising a second phase (52) implemented by said processing unit (12), the second phase (52) comprising, following reception (60) of said wake-up signal, reception (62) of physical measurements from a sensor fixed to said pipe and implementation of verification (64, 66) of the presence of a pressure anomaly as a function of said physical measurements.

10. A method according to claim 9, in which the verification of the presence of a pressure anomaly uses a neural network parameterised by learning to discriminate between parasitic vibrations and vibrations representative of a pressure anomaly.
